# EUROPEAN PATENT SPECIFICATION

(11) **EP 1 603 272 B1**
(45) Date of publication and mention of the grant of the patent: **01.10.2008**
(21) Application number: 05300438.8
(22) Date of filing: 31.05.2005
(51) Int. Cl.: H04L 12/24

(54) **Communication network event logging systems and methods**
Kommunikationsnetz für Event-Logging-Systeme und -Methoden
Systèmes et méthodes de notation d'événement du réseau de transmission

(30) Priority: 01.06.2004 US 858165
(43) Date of publication of application: 07.12.2005
(73) Proprietor: Alcatel Lucent, 75008 Paris (FR)
(72) Inventor: MAC CORMICK, James Stewart, K2S 1S8, Stittsville (CA); WELLS, Don, K1Y 1C7, Ottawa (CA); BADIAL, Kulpreet Singh, K2K 3K9, Kanata (CA)
(74) Representative: Korakis-Ménager, Sophie

(56) References cited:
- EP-A- 0 915 627
- US-A1- 2003 149 743
- US-B1- 6 633 835

## Description

### Field of the Invention

This invention relates generally to communication networks and, in particular, to logging events associated with communication networks.

### Background

Diagnosing failures or problems in communication networks, such as failed telephone or data call attempts, for example, can be particularly challenging in busy networks with a relatively high level of setup or control plane traffic. In the presence of a high volume of setup traffic or other signalling messages used to establish, maintain, or end a call, it becomes difficult to retrieve a signalling message history, also generally referred to as a protocol trace, for specific calls which fail. This difficulty arises primarily from the typically large volume of similar protocol traces for other calls in progress in a communication network at the same time.

According to one conventional technique, a failed call attempt is diagnosed by running a trace on signalling messages used in the setup of the failed call. This involves turning on a signalling trace function at one or more communication network nodes experiencing a call failure to log signalling messages for all calls at the node or nodes, performing actions which caused the failed call attempt, turning the trace function off, and then reviewing stored trace logs.

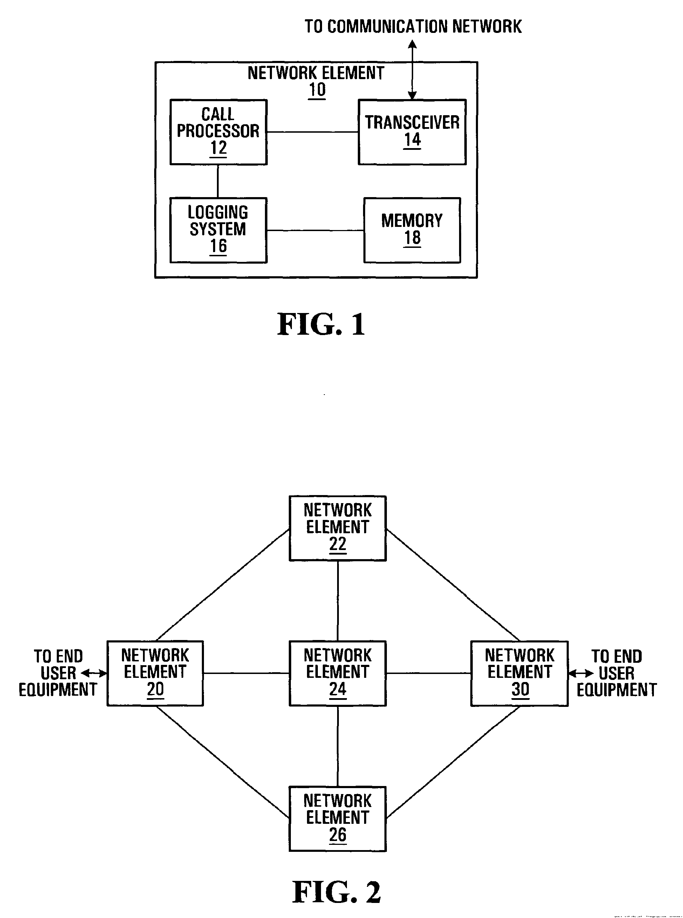

Fig. 1 is a block diagram of a communication network element implementing a conventional logging system. The network element 10 includes a call processor 12 connected to a transceiver 14 and a logging system 16, and a memory 18 connected to the logging system 16. As will be apparent to those skilled in the art, the call processor 12 processes at least signalling messages to establish calls in a communication network. Based on signalling messages received through the transceiver 14, for example, calls are routed through the communication network by controlling a switching component (not shown) at the network element 10. When a signalling trace function is enabled at the network element 10, by sending a control command or message from a network management system for instance, signalling messages received by the call processor 12 are also received by the logging system 16 for storage in a trace log in the memory 18.

However, the signalling trace function may result in very large volumes of protocol traces being collected on a node or nodes where suspect calls are failing. For example, a busy network may experience call volumes on the order of thousands of calls per second, each requiring multiple signalling messages during call setup. In one commonly used call setup protocol, call setup involves the exchange of 6 signalling messages, which in the above example would result in tens of thousands of signalling messages every second. In addition, protocol traces may be collected for several minutes or even longer before a failure or problem is repeated.

After protocol traces have been collected, an operator must then search through all of the traces, possibly at multiple nodes, for those relating to the failed call. As described above, this task can be intensive and time consuming due to the number of traces collected. Trace searching is further complicated by the similarity between protocol traces. There is also a possibility that trace logs at a node do not contain the required traces. This situation may occur, for example, where required traces have overwritten due to limited protocol trace log storage space or where the path of a call through the network is unknown and the operator is accessing trace logs at a node through which a call being traced was not established. Thus, the time spent searching must be weighed against the possibility that the search will be unsuccessful. This uncertainty further increases the difficulty of diagnosing communication network problems using conventional logging techniques.

One alternative to searching trace logs by accessing multiple nodes involves a transfer, using FTP for instance, of the trace logs from each node to a workstation. However, the transfer itself is a time consuming process, which consumes both CPU resources at each node and network resources throughout the network, and does not reduce the large volume of logged traces requiring inspection.

In some networks, signalling traces can be run only on a per interface or logical port basis. Since each interface typically supports a large number of connections, interface-specific trace logs are also often very large, and thus extraction of any information of interest for particular calls remains difficult.

Another logging technique provides for per-call trace logs at a single network node. However, this technique has a very limited logging trigger capability, such as a calling address, involves proprietary signalling trace formats, and does not provide for trigger detection and event logging at multiple nodes through which a call is routed.

### Summary of the Invention

Improved logging methods and systems for communication networks are provided. Events, illustratively protocol traces, associated with particular calls or other types of communication session are logged on a per-session basis, for only those sessions for which an event logging trigger has been detected. Per-session logging may thus drastically reduce the number of logs, thereby alleviating some of the problems described above. An operator can then more easily scan logs at different network elements in a communication network to quickly diagnose a problem.

United States Patent 6,633,835 proposes a system, method and computer program product for adaptive priority data filtering, and includes subsystems for creating and storing system and user logs. European patent application 0 915 627 relates to a network management system by which various types of logs can be generated. These systems are illustrative of Logging systems by which significant amounts of logged information can be generated, and which are prone to at Least some of the drawbacks noted above.

Logging techniques as disclosed herein also facilitate diagnosis of intermittent or infrequent failures or problems. Through the use of appropriate event logging triggers, a logging function may be enabled at a network element for a significant amount of time without logging an unmanageable volume of information, as information is collected only for communication sessions for which an event logging trigger has been detected.

According to one aspect of the invention, there is provided a method for logging events in a communication system, comprising detecting any of a plurality of event logging triggers for a communication session, and logging events associated with the communication session responsive to detection of any of the plurality of event logging triggers.

The event logging triggers may include, for example, one or more of enabling event logging for the communication session, a particular initiator of the communication session, a particular terminator of the communication session, a characteristic of the communication session, and a characteristic of the communication network.

In one embodiment, logging involves storing records of the events associated with the communication session in a data store. According to another embodiment, events are logged by transmitting records of the events to a remote system, such as a network management system or other system at which event logs may be analyzed. Events may be transmitted substantially in real time as the events are logged, for instance.

Logged events may also be associated with each trigger responsive to the detection of which the event was logged, a communication session for which the event was logged, or both. Communication session associations may be particularly preferred where events are logged for multiple communication sessions.

Events may include, for example, signalling messages or operating characteristics of communication equipment in the communication network.

A communication session event logging system according to another aspect of the invention comprises a detector configured to detect any of a plurality of event logging triggers for a communication session and an event logging module responsive to the detector and configured to log events associated with the communication session after any of the plurality of event logging triggers is detected.

In one embodiment, the detector and the event logging module are implemented in a processor configured to detect any of the plurality of event logging triggers for a communication session and to log events associated with the communication session responsive to detection of any of the plurality of event logging triggers.

The system may also include a memory. In such a system, the event logging module may be further configured to log the events by storing records of the events in the memory. An interface may be provided to enable access to the records of the events in the memory. In some embodiments, the system includes a transmitter, and the event logging module logs events by transmitting records of the events using the transmitter.

Event logging triggers may include intrinsic triggers associated with signalling messages for the communication session, extrinsic triggers, or both. An event logging enable command, a particular initiator of the communication session, a particular terminator of the communication session, and an operating characteristic of the communication session represent examples of intrinsic triggers. Extrinsic triggers may include a time of day, a performance characteristic of the communication session, and an operating or performance characteristic of the communication network, for instance.

A method of per-communication session event logging for a communication network is also provided. The method may include establishing a plurality of event logging triggers at a network element in the communication network, and logging events associated with a communication session upon detection of any of the plurality of event logging triggers for the communication session.

A user interface is preferably provided for accepting user input, and establishing may then involve receiving the plurality of event logging triggers through the user interface. The user interface may be provided at a network management system of the communication network, for example.

Trigger conditions may be stored in a memory to establish the plurality of event logging triggers. An event logging trigger may have one or more trigger conditions.

In a further embodiment of the invention, a network element for a communication network comprises an interface configured to receive user inputs for establishing a plurality of event logging triggers, and an event logging system configured to log events associated with communication sessions for which any of the plurality of event logging triggers is detected.

A method of logging signalling messages for communication sessions in a communication network according to another aspect of the invention comprises receiving signalling messages associated with respective communication sessions, determining, for each signalling message, whether the signalling message or a previous signalling message associated with the same communication session satisfies any of a plurality of logging conditions, and logging each signalling message associated with a communication session for which the signalling message or the previous signalling message for the communication session satisfies any of the plurality of logging conditions.

Systems and methods in accordance with aspects and embodiments of the invention may be implemented, for example, in one or more network element in a communication network.

Other aspects and features of embodiments of the present invention will become apparent to those ordinarily skilled in the art upon review of the following description of specific illustrative embodiments of the invention.

### Brief Description of the Drawings

Examples of embodiments of the invention will now be described in greater detail with reference to the accompanying drawings, in which:
Fig. 1 is a block diagram of a communication network element implementing a conventional logging system;
Fig. 2 is a block diagram of a communication network in which embodiments of the invention may be implemented;
Fig. 3 is a flow diagram of a method according to an embodiment of the invention; and
Fig. 4 is a block diagram of a network element incorporating a logging system according to an embodiment of the invention.

### Detailed Description of Preferred Embodiments

Fig. 2 is a block diagram of a communication network in which embodiments of the invention may be implemented. The communication network in Fig. 2 includes multiple network elements 20, 22, 24, 26, 30, also commonly referred to as nodes. As embodiments of the present invention are preferably implemented at network elements within a communication network, other equipment which may be provided within a communication network or operate in conjunction with a communication network, such as end user equipment, network management systems, and other user, management, or control equipment, has not been explicitly shown in Fig. 2. It should therefore be appreciated that the system of Fig. 2, as well as the contents of the other drawings, is intended solely for illustrative purposes. Embodiments of the present invention are in no way limited to any particular type of network, equipment, or communications.

The network elements 20, 22, 24, 26, 30 may be switches, routers, or analogous elements through which communication sessions may be established through the communication network. A communication session may be virtually any type of connection or communication signal exchange, including telephone calls and data communication sessions, for example. The particular types of communication session available in a communication network will be dependent upon the type of the network equipment and the protocols used therein, the services offered by service providers using the network, and/or the type of end user equipment between which communication sessions are established, for instance. Other factors affecting the particular types of communication sessions supported in a communication network will also be apparent to those skilled in the art.

In operation, the network elements 20, 22, 24, 26, 30 receive and process signalling messages to establish or set up, possibly to maintain, and to release or tear down communication sessions. For communication session setup, signalling messages may specify network addresses or other identifiers or information which allow a network element to determine a route through the network, or at least a local portion of the network, for establishing the communication session. Maintenance and release signalling messages may similarly identify a communication session by initiating and terminating addresses or identifiers, or some other identifier associated with the communication session, and provide commands or instructions to invoke an action or function on the part of one or more network elements. Identifiers and commands may be specified, for example, in information elements or fields which are configurable in signalling messages according to various communication session control protocols. ITU-T Q.2931 and Multiprotocol Label Switching (MPLS) Label Distribution Protocol (LDP) are examples of such protocols, although the invention is applicable to other protocols as well.

Several different mechanisms may be used for communication session management. Some communication networks support multiple types of connections for communication sessions, including so-called Permanent Virtual Connections (PVCs), Switched or Semi-Permanent Virtual Connections (SPVCs), and Switched Virtual Connections (SVCs). These types of connections are described below and represent illustrative examples of types of connection in conjunction with which embodiments of the invention may be implemented. However, the invention is in no way limited to these particular types of connection, and may be applied to other types of connections, including Label Switched Paths (LSPs) and Signalled LSPs (SLSPs), for example.

In the case of a PVC, the network elements 20, 22, 24, 26, 30 establish connections but do not participate in determining the routes of connections through the network. In contrast, SPVCs and SVCs involve routing decisions by the network elements 20, 22, 24, 26, 30.

In response to a connection request, a setup message, or an analogous signalling message, a network element establishes a connection with another network element. A signalling message of this type may be received from a network element, a network management or control system for an SPVC, or end user equipment for an SVC. Referring again to Fig. 2 in the context of establishing an SPVC or an SVC between end user equipment connected to the network elements 20 and 30, the network element 20 determines through which one of the network elements 22, 24, 26 a virtual connection to the network element 30 should be established.

The network element 20 then establishes a connection with the one of the network elements 22, 24, 26 selected for the SPVC or SVC being established, using further signalling messages. The next network element, illustratively the network element 22, then determines whether it should establish a connection to the network element 30 directly or through the network element 24. A virtual connection route through the network is thus determined by the network elements 20, 22, 24, 26, 30 instead of by a remote device or management system.

For a PVC, particular ones of the network elements 20, 22, 24, 26, 30 are instructed by a network management system or control terminal (not shown) to establish specified connections to other network elements. In the system of Fig. 2, a PVC between end user equipment connected to the network elements 20 and 30 may be established by instructing the network element 20 to establish a connection to the network element 22 and instructing the network element 22 to establish a connection to the network element 30. Alternative routes, through the network elements 24 or 26 or some combination of the network elements 22, 24, 26, are also possible. The network elements establish connections as instructed to thereby establish a PVC. A PVC may then be used for communication sessions between end user equipment having access to the PVC. In a common network service provider arrangement, a service provider effectively leases PVCs from a network owner or operator and provides services to subscribers through its PVCs.

It will be apparent from the foregoing that communication session setup may involve establishing connections through a network, as in the case of SPVCs and SVCs for instance, or using a pre-established connection such as a PVC. References herein to a communication session may therefore relate to connections, communication signal exchanges via connections, or both, and should be interpreted accordingly.

As described above, a communication network may handle thousands of calls and even more signalling messages every second. In the above example of a communication session between end user equipment connected to the network elements 20 and 30, conventional trace logging techniques would log traces for all communication sessions which were in progress at a network element during a logging period. For a connection path of 20-22-24-26-30 or an unknown connection path between 20 and 30, a network operator may be required to review trace logs for all communication sessions on each of the network elements 20, 22, 24, 26, 30 when attempting to diagnose a failure of a single communication session.

According to an aspect of the invention, a network element collects events associated with particular communication sessions on a per-session basis. In one embodiment, an event logging function is enabled during communication session setup, although other embodiments allow logging to be subsequently enabled. Per-session event logging may significantly reduce the number of logged events, illustratively traces or signalling messages, and thereby allow an operator to more easily scan logs at network elements and thus more quickly diagnose a problem.

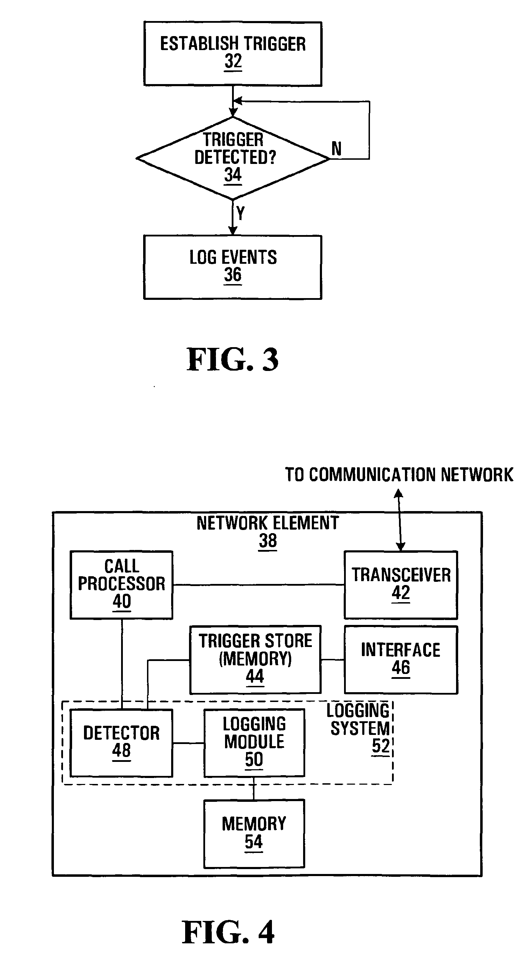

Fig. 3 is a flow diagram of a method according to an embodiment of the invention, in which event logging is controlled by triggers.

At 32, an event logging trigger is established at a network element at which events associated with a communication session are to be logged. Where a trigger for a communication session is detected at 34, events associated with the communication session are logged at 36. In one embodiment, the logging at 34 continues for the duration of a communication session once a trigger has been detected for that communication session. For example, a logging or trace enable flag may be set or stored in a data structure associated with a communication session when logging for the session is triggered. Then, until the call is terminated, all events for the communication session may be logged.

A trigger may relate to virtually any characteristic of a communication session, including, for example:
(a) a particular information field or element, such as a Trace Transit List IE in a setup message which may exist for sessions which are being diagnosed from an initiator or call source;
(b) an identifier, such as a Network Call Correlation Identifier (NCCI) in a signalling message which uniquely identifies an SPVC;
(c) a communication session initiator or terminator, identified by a Calling Party Number, a Called Party Number, or an IP address, for instance, which fully or partially matches a particular identifier;
(d) traffic requirement characteristics or parameters specified in a signalling message;
(e) a cause for a connection release or ending of a communication session, as specified in a release or release complete signalling message, for instance;
(f) a cause for a failed attempt at creating a communication session with the associated can be the trigger.

In a preferred embodiment, an event logging trigger is an enable command or instruction provided in a setup or other initial signalling message for establishing a communication session. This type of command may be inserted as a field or flag in a signalling message, for example, and processed at a network element to invoke event logging for that communication session. The trigger (a) above is one example of this type of trigger.

The triggers (b) and (c) above are examples of triggers which may be established to log events associated with communication sessions initiated and/or terminated by particular end users or equipment. These types of trigger may be useful in diagnosing problems experience by particular end users or groups of end users. A trigger of type (c) may be used, for example, where telephone calls initiated by a first end user to a particular terminating second end user fail while calls to other end users do not similarly fail. In this case, a trigger is detected for any subsequent communication session with the first end user as initiator and the second end user as terminator. In an Asynchronous Transfer Mode (ATM) network, initiators and terminators may be identified using calling and called numbers, and in MPLS and other IP-based networks, IP addresses identify initiators and terminators of communication sessions, for example. Other types of identifier may also be used in further embodiments.

It will be apparent from the above description of command- and identifier-based triggers that triggers may have one or more associated trigger conditions. A command or instruction trigger normally has a single associated trigger condition, in particular whether the command or instruction has been provided in a signalling message or possibly by another source. An initiator/terminator trigger, however, may have one or more than one condition, to provide for different levels of selectivity between communications sessions in which a particular end user is a participant.

Triggers (d) and (e) above represent examples of triggers which relate to operating characteristics of a communication session. This type of trigger provides for logging of events associated with communication sessions which have been configured for operation in a particular manner or have unexpectedly ended for a particular reason.

The example trigger (f) above provides for logging events for failed communication session attempts. Events may be logged in response to a failure associated with a particular cause, or any of multiple causes specified as conditions for the trigger. For event logging associated with communication session attempt failures, a setup message and possibly other signalling messages has already been received and is being processed prior to the trigger. In this case, however, the setup message may provide information which would be useful in determining the conditions which led to the failure. According to a preferred embodiment, the setup message, and more generally events preceding a trigger, may be stored and thereby made available for logging in response to a subsequent trigger. For the above example of a setup message, the setup message might be stored during processing of the initial call attempt, and the deleted or overwritten once the communication session has been successfully routed.

The above list of event logging triggers is not intended to be exhaustive. Embodiments of the invention are in no way restricted to any particular types of trigger.

For example, the triggers described above may be considered intrinsic triggers, associated with signalling messages or a communication session itself. Other intrinsic triggers, as well as extrinsic triggers, are also contemplated. Examples of extrinsic triggers include time of day, performance characteristics of a communication session, and operating or performance characteristics of a communication network. A performance characteristic may include a user-configured performance threshold, for instance. When the threshold is crossed, event logging for the communication session is started. Triggers may also be based on other session or system characteristics, including coding scheme, protocol type, the occurrence of message decoding errors, error rates, and traffic load, for instance.

Other types of trigger and combinations of triggers may be established to provide for selection of communication sessions for event logging based on any desired criteria.

It should also be appreciated that more than one trigger may be established for use in event logging according to embodiments of the invention. Trigger detection at 34 may then involve detecting any of multiple event logging triggers.

In one embodiment of the invention, events are logged at 36 by storing records of the events in a data store, provided in a memory device at a network element, for example. Access to the data store is preferably provided to allow a network operator to review the event records and diagnose any problems experienced during communication sessions.

Where multiple triggers are established, each logged event is preferably associated with any triggers responsive to the detection of which the event was logged. This may be accomplished by storing a trigger number, type, identifier, or some other information relating to a detected trigger in an event log or along with event records. Alternatively, multiple per-trigger data stores or memory devices may be provided. Records of events are then stored in a corresponding data store or memory device. In order to conserve memory space, each event may be stored only once. In this case, records for events which are logged responsive to more than one trigger may include more than one trigger identifier. For per-trigger data store embodiments, event records may be stored in one of the per-trigger data stores or a separate data store, with references, illustratively pointers, to the stored record being stored in the per-trigger data store for each trigger which caused the event to be logged.

An association between events and communication sessions may also be indicated in event records. As described above, network elements may handle many communication sessions at any time. In this case, an indication of an association between each communication session and events logged for the communication session may be particularly useful.

The above associations between event records, triggers, and/or communication sessions facilitate a determination as to the reason an event was logged and for which communication session the event was logged, thereby significantly simplifying event log searching and thus diagnosis of problems or failures. Event record review and searching may be even further simplified by providing support for subsequent event record presentation functions including sorting event records into groups according to communication session or trigger for instance.

Event logging at 36 may also or instead include transmitting records of logged events to a remote device. The remote device may be a network management system or remote terminal at which the records may be stored for later review, for example. Substantially real-time transmission of event records as the events are logged may reduce the memory requirements for event logs, in that transmitted event records need not necessarily be stored at a network element after being transmitted, or preferably after receipt of transmitted records has been acknowledged. Event record transmission may also provide for more convenient review of event logs, as a network operator has access to event records from multiple nodes at a single device or system to which all logged events for a communication session are transmitted.

All event records collected within a communication network may be transmitted to a single central system, as a communication network is normally maintained by a single entity. However, different destination devices or systems may instead be supported, for different service providers or network maintenance personnel, for example. Multiple destinations for event record transmissions enable distribution of event records for review at different sites or by different personnel. Event record transmit destinations may be established along with triggers or in signalling messages, for instance.

The above event record transmission feature may be provided in many different ways. A so-called Simple Network Mail Protocol (SNMP) trap is one example of a suitable network messaging technology, although the invention is in no way limited thereto.

In one embodiment, events are signalling messages or protocol traces, although other information or types of event may also or instead be logged, including performance or operating information relating to the communication session or communication equipment in the communication network.

Selectivity between the types of events to be logged responsive to event logging triggers may also be provided. For example, a trigger might be configured to start logging resource request events after a certain number of resource allocation failures. Other types of event-selective triggers having different associated trigger conditions for logging different types of events may similarly be configured.

Many different mechanisms may be provided for establishing event logging triggers. In one embodiment, triggers are specified or configured by user inputs received through a user interface at a network element, network management system, or end user equipment, for example, and stored in a memory at a logging system. Triggers are specified in signalling messages, illustratively connection request or setup messages, for communication sessions in other embodiments.

The above description relates primarily to a method according to an embodiment of the invention, which may be implemented in instructions stored on a computer readable medium, for example. Fig. 4 is a block diagram of a network element incorporating a logging system according to an embodiment of the invention.

The network element 38 of Fig. 4 includes a call processor 40, a transceiver 42, a trigger store 44, an interface 46, a logging system 52, and a memory 54.

The call processor 40 is a signal processing component which performs at least communication session establishment, teardown and possibly management functions. Implementations of the call processor 40 may include hardware components, software components, or some combination of hardware and software.

The transceiver 42 includes communication components compatible with a communication network, and may vary between different communication networks, depending upon communication network types and protocols, for example. Many modern transceivers include both hardware components and signal processing software.

The trigger store 44 represents a data store in a memory for storing triggers and associated trigger conditions. Although shown as separate blocks in Fig. 4, those skilled in the art will appreciate that the trigger store 44 may reside at a location in the memory 54, which may be a solid state memory device, a disk, or other memory component, for instance. Thus, a single memory device at a network element may be used for multiple data stores, including one or more event logs, trigger stores, and data stores for other types of information. In other embodiments, dedicated memory devices may be provided.

In the network element 38, triggers may be configured using the interface 46, illustratively a keyboard or other input device which receives user inputs. In a preferred embodiment, the interface 46 provides a command line interface (CLI) through which a user interacts with the network element 38. As those skilled in the art will appreciate, a CLI may be presented at a local control terminal at the network element 38 or at a remote terminal such as a network management system. Therefore, the interface 46 may include a local interface, as shown in Fig. 4, an interface to a remote system, or an interface which may be presented to a user at the network element 38 or a remote device or system, as in the case of a CLI.

The detector 48 and the logging module 50 operate as described below to support per-session event logging at the network element 38, and may be implemented in hardware, software, or some combination thereof.

Thus, software modules may be provided at the network element 38 for performing multiple respective functions, including functions of any of the call processor 40, the transceiver 42, the interface 46, the detector 48, and the logging module 50. In some embodiments, a single general-purpose processor may be configured to execute all of the software modules. Dedicated-processor embodiments are also contemplated, where the network element 38 includes multiple cards or electronic devices with their own processors, for instance.

From a comparison of Fig. 4 and Fig. 1, it will be apparent that the network element 38 is substantially similar to the network element 10, with the exception of the trigger store 44, the interface 46, and the logging system 52, which enable event logging in accordance with embodiments of the invention as described in further detail below.

The operation of the network element 38 in respect of communication session establishment and management may be substantially as described above. For example, the call processor 40 may process signalling messages to establish communication sessions in a communication network, illustratively by controlling a switching component (not shown) based on signalling messages received through the transceiver 42. However, event logging at the network element 38 is performed on a per-session basis and is dependent upon triggers configured in the trigger store 44 through the interface 46.

The detector 48 is configured to detect an event logging trigger for a communication session. In one embodiment, the call processor 40 passes received signalling messages, or information parsed or otherwise extracted from received signalling messages, to the detector 48, which determines whether the signalling message or information satisfies trigger conditions of any of the triggers in the trigger store 44. For identifier-based triggers, for example, the detector 48 determines whether an identifier in a signalling message partially or fully matches an identifier in the trigger store 44, and a trigger is detected where a match occurs. As described above, other types of trigger are also contemplated, and the detector 48 may thus include more than one type of detector or otherwise be configured to detect multiple triggers or types of trigger.

The event logging module 50 is responsive to the detector 48 and is configured to log events associated with the communication session after the event logging trigger is detected.

Several different event logging control schemes may be implemented to provide for per-session event logging. In one embodiment, the detector 48 is configured to receive events or information relating to events for a communication session from the call processor 40, and/or possibly from other components of the network element 38 depending upon the types of events to be logged. The detector 48 then determines whether the event satisfies trigger conditions of a trigger or a trigger has already been detected for the communication session, and, where the event is to be logged, passes the event to the logging module 50 for logging.

According to another embodiment, the detector 48 sets a flag or indicator, in the trigger store 44 or another store or memory device, when a trigger is detected. A flag or indicator may include or be associated with an identifier of a communication session, for example. In this type of embodiment, the logging module 50 preferably receives events for communication sessions and accesses the flag or indicator to determine whether each event should be logged.

In a still further embodiment, trigger detection for communication sessions is handled by the call processor 40. A flag or indicator is then set by the call processor 40, in a data structure associated with a communication session for which a trigger is detected for example. The flag may be stored in a memory or register of the call processor 40, the trigger store 44, or another data store or memory device. The detector 48 then determines whether events received from the call processor 40 are to be logged by accessing the flag.

It should be appreciated that other logging control mechanisms may also be used, and that the invention is not restricted to any particular control mechanism. It should also be appreciated that events may be received by the logging system 52 from other components than the call processor 40. A network element may include detectors, processors, measurement devices, and other equipment for detecting or generating events to be logged.

In the illustrative example network element 38, event logging involves storing records of the events in the memory 54. Subsequent access to stored event records may be provided, for example, at a remote device or system through the transceiver 42 or a separate control signal transceiver, or at the network element 38 through a local interface. In one embodiment, the interface 46 provides for both trigger configuration and stored event record access. A CLI as described above may support both trigger configuration and event record access.

As described above, event logging may involve storing event records in an event log in the memory 54 or transmitting event records, using a transmitter or transmit function of the transceiver 42, for example.

The interface 46 receives user inputs for establishing event logging triggers in the trigger store 44. In one embodiment, the interface 46 is a local interface which allows entry of triggers or trigger conditions using a keyboard or other input device at the network element 38. In other embodiments, trigger configuration may be accomplished through the transceiver 42 or a control signal transceiver, for instance, using a communication network management system or another remote device or system. The above event record transmission feature may be particularly desirable in conjunction with remotely configured triggers, to return records of logged events to the remote device or system using which the triggers were configured.

In some embodiments, the network element 38 supports establishment of event logging triggers in signalling messages as described above. The interface 46 may therefore be a signalling message interface, provided by the call processor 40, for example. The network element 38 may also support multiple types of trigger configuration mechanisms, with the call processor 40 supporting "on-the-fly" triggers specified in signalling messages for instance, and the interface 46 providing user input-based triggers.

Triggers may be stored in the trigger store 44, for example, in a block of allocated memory or in an array of trigger data structures. The trigger store 44 may also store trigger conditions and other trigger-related information organized by trigger type. Other trigger storage data structures or arrangements may also be used. The invention is in no way limited to any particular data structures, order, or arrangement of information in the trigger store 44.

What has been described is merely illustrative of the application of the principles of the invention. Other arrangements and methods can be implemented by those skilled in the art without departing from the scope of the present invention.

For example, embodiments of the invention preferably do not preclude full event logging according to conventional logging techniques. Per-session event logging may therefore be implemented in addition to full event logging, to permit more extensive logging of events in a communication network for diagnosis of equipment- or network-level failures which affect multiple communication sessions for instance. Similarly, a communication network may include different types of network elements, with some network elements supporting per-session event logging in accordance with embodiments of the invention and other network elements supporting only full event logging functionality. In the case of software-based per-session event logging, network elements may be configurable by software download to provide for per-session event logging.

When implemented in conjunction with full event logging, a per-session event logging system according to an embodiment of the invention may also search a full event log for previous events associated with a communication session for which a trigger is detected. This permits logging of a complete set of events for a communication session regardless of whether an event logging trigger is detected at the beginning of a communication session or at a later time. Timestamping and ordering of events in a full event log, for example, may facilitate this type of "retroactive" functionality.

It should also be appreciated that the invention is not limited to communication sessions involving signalling message exchange. Events and triggers need not necessarily be based on signalling messages.

## Claims

1. A method for logging events in a communication system, comprising:
detecting (34), as an event logging trigger for a communication session, an event logging enable command in a setup signalling message for establishing the communication session; and
logging (36) events associated with the communication session responsive to detection of the event logging enable command.

2. The method of claim 1, wherein logging (36) comprises storing records of the events associated with the communication session in a data store.

3. The method of claim 2, further comprising:
providing access to the records in the data store.

4. The method of claim 1, wherein logging (36) comprises transmitting records of the events.

5. The method of claim 4, wherein transmitting comprises transmitting each of the events substantially in real time as the events are logged.

6. The method of claim 1, wherein logging (36) comprises associating an event with the event logging enable command.

7. The method of any one of claims 1 to 6, wherein the events comprise signalling messages.

8. The method of any one of claims 1 to 7, wherein the events comprise operating characteristics of communication equipment in the communication network.

9. A computer-readable medium storing instructions which when executed perform the method of any one of claims 1 to 8.

10. A communication session event logging system, comprising:
a detector (48) configured to detect, as an event logging trigger for a communication session, an event logging enable command in a setup signalling message for establishing the communication session; and
an event logging module (50) responsive to the detector (48) and configured to log events associated with the communication session after the event logging enable command is detected.

11. The system of claim 10, wherein the detector (48) and the event logging module (50) are implemented in a processor configured to detect the event logging enable command for a communication session and to log events associated with the communication session responsive to detection of the event logging enable command.

12. The system of claim 10 or claim 11, further comprising:
a memory (54),
wherein the event logging module (50) is further configured to log the events by storing records of the events in the memory (54).

13. The system of claim 12, further comprising:
an interface (46) for providing access to the records of the events in the memory (54).

14. The system of claim 12 or claim 13, wherein the records indicate an association between the events and the communication session.

15. The system of any one of claims 12 to 14, wherein the detector (48) is configured to detect event logging enable commands for a plurality of communication sessions.

16. The system of claim 15, wherein the records indicate associations between each of the plurality of communication sessions and events logged for the communication session.

17. The system of claim 10 or claim 11, further comprising:
a transmitter (42),
wherein the event logging module (50) is further configured to log the events by transmitting records of the events to a remote system using the transmitter (42).

18. The system of any one of claims 10 to 17, implemented in at least one network element (20, 22, 24, 26, 30) in a communication network through which communication sessions may be established.

## Patentansprüche

1. Ein Verfahren für das Logging von Events in einem Kömmunikationssystem, umfassend:
Erkennen (34) eines Event-Logging-Freigabebefehls als einen Event-Logging- Trigger für eine Kommunikationssitzung in einer SETUP-Signalisierungsnachricht zum Herstellen der Kommunikationssitzung; und
Logging (36) von mit der Kommunikationssitzung verbundenen Events im Anschluss an das Erkennen des Event-Logging-Freigabebefehls.

2. Das Verfahren nach Anspruch 1, wobei das Logging (36) das Speichern von Verzeichnissen der mit der Kommunikationssitzung verbundenen Events in einer Datenbank umfasst.

3. Das Verfahren nach Anspruch 2, weiterhin umfassend:
Gewähren von Zugriff auf die Verzeichnisse in der Datenbank.

4. Das Verfahren nach Anspruch 1, wobei das Logging (36) die Übertragung der Eventverzeichnisse umfasst

5. Das Verfahren nach Anspruch 4, wobei die Übertragung das Übertragen eines jeden Events im Wesentlichen in Echtzeit unmittelbar nach dem Loggen der Events umfasst.

6. Das Verfahren nach Anspruch 1, wobei das Logging (36) das Zuordnen eines Events zu dem Event-Logging-Freigabebefehl umfasst

7. Das Verfahren nach einem beliebigen der Ansprüche 1 bis 6. wobei die Events Signalisierungsnachrichten umfassen.

8. Das Verfahren nach einem beliebigen der Ansprüche 1 bis 7. wobei die Events Betriebsmerkmale von Kommunikationseinrichtungen im Kommunikationsnetzwerk umfassen.

9. Ein computeriesbares Medium zum Speichern von Befehlen, welche bei deren Umsetzung das Verfahren nach einem beliebigen der Ansprüche 1 bis 8 ausführen.

10. Ein Kommunikationssitzungs-Event-Logging-System, umfassend:
Einen Detektor (48), welcher dafür konfiguriert ist, einen Event-Logging-Freigabebefehl in einer SETUP-Signalisierungsnachricht als einen Event-Logging-Trigger für das Herstellen einer Kommunikationssitzung zu erkennen; und
Ein Event-Logging-Modul (50) im Anschluss an den Detektor (48), welcher dafür konfiguriert ist, der Kommunikationssitzung zugeordnete Events nach Erkennen des Event-Logging-Freigabebefehls zu logen.

11. Das System nach Anspruch 10, wobei der Detektor (48) und das Event-Logging-Modul (50) in einem Prozessor implementiert sind, Welcher dafür konfiguriert ist, den Event-Logging-Freigabebefehl für eine Kommunikationssitzung zu erkennen und mit der Kommunikationssitzung verbundene Events im Anschluss an das Erkennen des Event-Logging-Freigabebefehls zu loggen.

12. Das System nach Anspruch 10 oder Anspruch 11, weiterhin umfassend:
Einen Speicher (54),
wobei das Event-Logging-Modul (50) weiterhin dafür konfiguriert ist, die Events durch Speichern von Verzeichnissen der Events in dem Speicher (54) zu loggen.

13. Das System nach Anspruch 12, weiterhin umfassend:
Eine Schnittstelle (46) zum Gewähren von Zugang zu den Events im Speicher (54).

14. Das System nach Anspruch 12 oder Anspruch 13, wobei die Verzeichnisse eine Verbindung zwischen den Events und der Kommunikationssitzung angeben.

15. Das System nach einem beliebigen der Ansprüche 12 bis 14, wobei der Detektor (48) dafür konfiguriert ist, Event-Logging-Freigabebefehle für eine Vielzahl von Kommunikationssitzungen zu erkennen.

16. Das System nach Anspruch 15, wobei die Verzeichnisse eine Verbindung zwischen einer jeden der Vielzahl von Kommunikationssitzungen und den für die Kommunikationssitzung geloggten Events angeben.

17. Das System nach Anspruch 10 oder Anspruch 11, weiterhin umfassend:
Einen Sender (42),
wobei das Event-Logging-Modul (50) weiterhin dafür konfiguriert ist, die Events durch Übertragen der Eventverzeichnisse an ein Fernsystem anhand des Senders zu loggen.

18. Das System nach einem beliebigen der Ansprüche 10 bis 17, wobei das System in mindestens einem Netzelement (20, 22, 24, 26, 30) in einem Kommunikationsnetzwerk implementiert wird, über welches Kommunikationssitzungen hergestellt werden können.

## Revendications

1. Procédé pour consigner des événements dans un système de communication, comprenant :
Détection (34), en tant que déclencheur de consignation d'événement pour une session de communication, d'une commande d'activation de consignation d'événement dans un message de signalisation d'établissement pour établir la session de communication ; et
Consignation (36) des événements associés avec la session de communication en réponse à la détection de la commande d'activation de consignation d'événement.

2. Procédé selon la revendication 1, la consignation (36) comprenant le stockage des enregistrements des événements associés à la session de communication dans une mémoire de données.

3. Procédé selon la revendication 2, comprenant en plus la fourniture de l'accès aux événements dans la mémoire de données.

4. Procédé selon la revendication 1, la consignation (36) comprenant la transmission d'enregistrements des événements.

5. Procédé selon la revendication 4, la transmission comprenant la transmission de chacun des événements sensiblement en temps réel à mesure que les événements sont consignés.

6. Procédé selon la revendication 1, la consignation (36) comprenant l'association d'un événement avec la commande d'activation de la consignation.

7. Procédé selon l'une quelconque des revendications 1 à 6, les événements comprenant des messages de signalisation.

8. Procédé selon l'une quelconque des revendications 1 à 7, les événements comprenant les caractéristiques de fonctionnement de l'équipement de communication dans le réseau de communication.

9. Support lisible par ordinateur stockant des instructions qui, lorsqu'elles sont exécutées, mettent en oeuvre le procédé selon l'une quelconque des revendications 1 à 8.

10. Système de consignation des événements dans une session de communication, comprenant :
un détecteur (48) configuré pour détecter, en tant que déclencheur de consignation d'événement pour une session de communication, une commande d'activation de consignation d'événement dans un message de signalisation d'établissement pour établir la session de communication ; et
un module (50) de consignation d'événements réagissant au détecteur (48) et configuré pour consigner les événements associés avec la session de communication après la détection de la commande d'activation de consignation d'événement.

11. Système selon la revendication 10, dans lequel le détecteur (48) et le module (50) de consignation d'événements sont mis en oeuvre dans un processeur configuré pour détecter la commande d'activation de consignation d'événement pour une session de communication et pour consigner les événements associés avec la session de communication en réponse à la détection de la commande d'activation de consignation d'événement.

12. Système selon la revendication 10 ou la revendication 11, comprenant en plus:
une mémoire (54),
le module (50) de consignation d'événements étant en plus configuré pour consigner les événements en stockant des enregistrements dans la mémoire (54).

13. Système selon la revendication 12, comprenant en plus une interface (46) pour permettre l'accès aux enregistrements dans la mémoire (54).

14. Système selon la revendication 12 ou la revendication 13, les enregistrements indiquant une association entre les événements et la session de communication.

15. Système selon l'une quelconque des revendications 12 à 14, le détecteur (48) étant configuré pour détecter les commandes d'activation de la consignation d'événement pour une pluralité de sessions de communication.

16. Système selon la revendication 15, les enregistrements indiquant les associations entre chacune de la pluralité de sessions de communication et les événements consignés pour la session de communication.

17. Système selon la revendication 10 ou la revendication 11, comprenant en plus:
un émetteur (42),
le module (50) de consignation d'événements étant en plus configuré pour consigner les événements en transmettant les enregistrements des événements à un système distant utilisant l'émetteur (42).

18. Système selon l'une quelconque des revendications 10 à 17, mis en oeuvre dans au moins un élément de réseau (20, 22, 24, 26, 30) dans un réseau de communication par le biais duquel des sessions peuvent être établies.
